# EUROPÄISCHE PATENTANMELDUNG

(11) **EP 2 181 967 A1**
(43) Veröffentlichungstag der Anmeldung: **05.05.2010**
(21) Anmeldenummer: 09013186.3
(22) Anmeldetag: 20.10.2009
(51) Int. Cl.: C02F 11/08

(54) **Verfahren zur Ausfällung von Salzen**

(30) Priorität: 29.10.2008 DE 102008053618
(71) Anmelder: Karlsruher Institut für Technologie, 76131 Karlsruhe (DE)
(72) Erfinder: Kruse, Andrea, 76646 Leimersheim (DE); Dinjus, Eckhard, 76774 Leimersheim (DE); Pagel, Mathias, 68753 Waghäusel (DE)

(57) **Zusammenfassung**

Die Erfindung betrifft ein Verfahren zur Ausfällung von Salzen. Hierzu werden eine Salzlösung, die das mindestens eine auszufällende Salz enthält, und ein Fluid, das die Löslichkeit des mindestens einen auszufällenden Salzes vermindert, gleichzeitig in ein Gefäß eingeleitet, worin sich eine wässrige Lösung mit einer Temperatur von 300 °C bis 1000 °C bei einem Druck von 20 MPa bis 1000 MPa befindet, wodurch die Salze zumindest teilweise über das Volumen des Gefäßes ausfallen.

Für das Verfahren werden auszufällende Salz eingesetzt, die bei den im Gefäß herrschenden Bedingungen eine hydrothermale Schmelze ausbilden.

Das eingeleitete Fluid wirkt nicht lokal, sondern im ganzen Volumen des Gefäßes, da die Löslichkeit in nah- und überkritischem Wasser und die Diffusionsgeschwindigkeit sehr hoch sind. Dadurch läuft eine hydrothermale Schmelze im Schwerefeld nach unten und wird entsprechend abgetrennt.

## Beschreibung

Die Erfindung betrifft ein Verfahren zur Ausfällung von Salzen, insbesondere für Reaktionen in nah- oder überkritischem Wasser.

In hydrothermalen Verfahren, d.h. bei Verfahren in Wasser bei erhöhten Temperaturen und Drücken, ist die Anwesenheit von Salzen häufig ein Problem. In überkritischen Verfahren wie z.B. der hydrothermalen Wasserstofferzeugung aus Biomasse oder der überkritischen Totaloxidation von Schadstoffen führt die unkontrollierte Ausfällung von Salzen zu Verstopfen. In unterkritischen Verfahren mit heterogenen Katalysatoren wie z.B. der Methanerzeugung führen die anwesenden Salze zu einer Inaktivierung (Vergiftung) des Katalysators.

Es ist bekannt, Salze mittels Sedimentation in einem Sedimentationsabscheider oder mittels der Coriolis-Kraft in einem Zentrifugal-Abscheider (Zyklon) abzutrennen, allerdings erst, wenn sie bereits ausgefallen sind. Dann hat sich die Verstopfung bereits vor dem Abscheider gebildet, was für eine effiziente Verfahrensführung insbesondere bei nah- und überkritischen Verfahren oft zu spät ist.

Um dennoch eine Fällung am Ort der Abtrennung zu fördern, wurden Maßnahmen zur lokalen Überhitzung eingesetzt, insbesondere mit so genannten Heizfingern. Beispiele hierfür finden sich in der DE 31 18 348 A1, der WO 99/64112 A1, bei C.N. Staszak, K. C. Malinowski und W.R. Killilea, The Pilot-Scale Demonstration of the MODAR Oxidation Process for the Destruction of Hazardous Organic Waste Materials, Environmental Progress 6, S. 39-43, 1987, oder in H. Schmid, S. Baur, A. Krämer und J. Gerber, Zersetzung eines biologisch nicht abbaubaren Abwassers aus der Biozid-Produktion mit dem SUWOX-Verfahren, FZKA Bericht 6981, März 2004.

Zwar wird an der heißen Oberfläche der Heizfinger die Ausfällung von Salzen gefördert, allerdings tritt dieser Effekt nur lokal auf und ist in der Regel auch nur von kurzer Dauer, da sich die ausgefallenen Salze auf dem Heizfinger niederschlagen und den Wärmeübergang so stark verringern, dass er seine Wirkung verliert. Außerdem können an den entsprechend heißen Oberflächen des Heizfingers unerwünschte chemische Reaktionen ablaufen. Schließlich muss bei unterkritischen Verfahren wie z. B. der heterogen katalysierten Methanerzeugung das Reaktionsgemisch anschließend wieder gekühlt werden, wodurch sich die Energieeffizienz des Verfahrens deutlich verschlechtert.

Aus Y. Hakuta, H. Hayashi und K. Arai, Fine particle formation using supercritical fluids, Current Opinion in Solid State and Material Science 7, S. 341-351, 2003, ist bekannt, unpolare Substanzen einzuspeisen, um Salze auszufällen.

Ausgehend hiervon ist es die Aufgabe der vorliegenden Erfindung, ein Verfahren vorzuschlagen, das die genannten Nachteile und Einschränkungen nicht aufweist.

Diese Aufgabe wird durch die Merkmale des Anspruchs 1 gelöst. Die Unteransprüche beschreiben vorteilhafte Ausgestaltungen der Erfindung.

Das erfindungsgemäße Verfahren zur Ausfällung von Salzen basiert auf der Tatsache, dass sich bestimmte Fluide wie z.B. Kohlendioxid gut bis vollständig im nah- bzw. überkritischen Wasser lösen, während sie gleichzeitig die Löslichkeit der Salze herabsetzen, so dass Salzpartikel ausfallen. Daher fallen die größeren und damit schwereren Partikel in einem Schwerefeld nach unten aus und werden auf diese Weise abgetrennt.

Erfindungsgemäß werden daher eine Salzlösung, die ein Salz oder mehrere Salze, die auszufällen sind, enthält, und ein Fluid, das die Löslichkeit des oder der auszufällenden Salze herabsetzt, gleichzeitig einem Gefäß, das insbesondere als Abscheider ausgestaltet ist, zugeführt.

In diesem Gefäß befindet sich eine wässrige Lösung mit einer Temperatur von 300 °C bis 1000 °C, vorzugsweise von 300 °C bis 650 °C, besonders bevorzugt von 300 °C bis 400 °C, bei einem Druck im Bereich von 20 MPa bis 1000 MPa, bevorzugt von 22 MPa bis 50 MPa.

Bevorzugt wird ein Gas, insbesondere ein bei einem sich an die Ausfällung anschließenden Verfahren entstehendes Produktgas, oder alternativ eine organische Flüssigkeit als Fluid eingesetzt. Aufgrund seiner hohen Löslichkeit bereits bei niedrigen Temperaturen ist Kohlendioxid CO₂ besonders bevorzugt.

Die gleichzeitige Zuführung der Salzlösung und des Fluids sowie die im Gefäß herrschenden Bedingungen bewirken, dass die Salze zumindest teilweise über das Volumen des Gefäßes ausfallen. Üblicherweise fallen insbesondere die größeren und damit schwereren Partikel in einem Schwerefeld nach unten aus und werden auf diese Weise abgetrennt, während sich die kleineren und damit leichteren Partikel im Schwerefeld nach oben bewegen und dem sich an die Ausfällung anschließenden Verfahren zugeleitet werden, worin sie aufgrund ihrer geringen Größe nur wenig stören.

Für das erfindungemäße Verfahren werden jedoch ein oder mehrere Salze eingesetzt, die bei den im Gefäß herrschenden Bedingungen eine hydrothermale Schmelze ausbilden. Hierbei läuft an Stelle der festen Salzpartikel eine hydrothermale Schmelze im Schwerefeld nach unten und wird entsprechend abgetrennt.

Das erfindungsgemäße Verfahren weist insbesondere die folgenden Vorteile auf.

Das eingespeiste Fluid wirkt nicht lokal, sondern im ganzen Volumen (Raumelement) des Gefäßes, da die Löslichkeit in nah- und überkritischen Wasser und die Diffusionsgeschwindigkeit sehr hoch ist. Dadurch bilden sich aus der Salzlösung viele kleine Kristalle aus und die Anhaftung der Salze an die Wand wird verringert.

Wird das sich an die Ausfällung anschließende Verfahren bei unterkritischen Temperaturen durchgeführt, erfolgt nunmehr die Salzentstehung am Ort der Abscheidung, wodurch Verstopfungen im Zulauf zum Reaktionsgefäß vermieden werden.

Wird die erfindungsgemäße Ausfällung in sich hieran anschließende Verfahren mit unterkritischen Temperaturen eingesetzt, entfallen eine Erhitzung des Reaktionsgutes und damit auch die anschließende Abkühlung.

Wird Kohlendioxid als Fluid eingespeist, so ist es sowohl bei der hydrothermalen Gasauszeugung aus Biomasse als auch bei der überkritischen Nassoxidation von Schadstoffen ein Hauptprodukt der Reaktion. Damit entstehen keine Kosten für die Beschaffung des Gases.

Wird Kohlendioxid als Fluid eingespeist, wirkt es gleichzeitig als Säure, was insbesondere bei verfahren zur hydrothermalen Wasserstofferzeugung den Abbau von Biomasse fördert.

Die Erfindung wird im Folgenden anhand von Ausführungsbeispielen und den Figuren näher erläutert. Hierbei zeigen
- **Fig. 1**: Schematischer Ablauf der Salzausfällung in einem Zentrifugal-Abscheider (Zyklon);
- **Fig. 2**: Schematischer Ablauf der Salzausfällung in einem Sedimentationsabscheider.

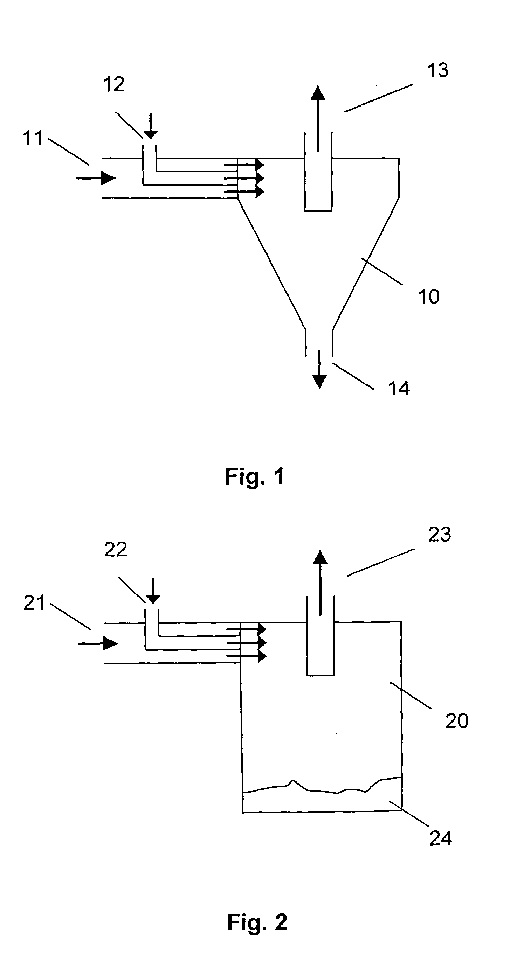

In **Fig. 1** ist schematisch der Ablauf der erfindungsgemäßen Salzausfällung in einem Zentrifugal-Abscheider (Zyklon) **10** dargestellt. In den Zentrifugal-Abscheider **10,** worin sich eine wässrige Lösung in nah- bzw. überkritischem Zustand befindet, wird hierzu mittels eines Zulaufs **11** eine wässrige Salzlösung eingebracht. Hierzu wird gleichzeitig mittels einer Zuführung **12** Kohlendioxid in den Zentrifugal-Abscheider **10** zugeführt, das sich gut bis vollständig im nah- bzw. überkritischen Wasser löst. Durch die Einspeisung von Kohlendioxid in den Zentrifugal-Abscheider **10** wird die Löslichkeit der Salze in der wässrigen Salzlösung herabgesetzt und Salzpartikel fallen aus. Die kleineren und damit leichteren Partikel bewegen sich nach oben und werden mittels eines Auslaufs **13** für kleine Salzpartikeln zusammen mit in Wasser gelöstem Kohlendioxid abgetrennt. Die größeren und damit schwereren Partikel fallen nach unten aus und werden mittels eines Auslaufs **14** für große Salzpartikeln zusammen mit in Wasser gelöstem Kohlendioxid abgetrennt. Werden Salze, die hydrothermale Schmelzen bilden, eingesetzt, so läuft an Stelle der festen Salzpartikel eine hydrothermale Schmelze nach unten und wird mittels des Auslaufs **14** abgetrennt.

In **Fig. 2** ist schematisch der Ablauf der erfindungsgemäßen Salzausfällung in einem Sedimentationsabscheider **20** dargestellt. In den Sedimentationsabscheider **20,** worin sich eine wässrige Lösung in nah- bzw. überkritischem Zustand befindet, wird hierzu mittels eines Zulaufs **21** eine wässrige Salzlösung eingebracht. Hierzu wird gleichzeitig mittels einer Zuführung **22** Kohlendioxid in den Sedimentationsabscheider **20** zugeführt, das sich gut bis vollständig im nah- bzw. überkritischen Wasser löst. Durch die Einspeisung von Kohlendioxid in den Sedimentationsabscheider **20** wird die Löslichkeit der Salze in der wässrigen Salzlösung herabgesetzt und Salzpartikel fallen aus. Die kleineren und damit leichteren Partikel bewegen sich nach oben und werden mittels eines Auslaufs **23** für kleine Salzpartikeln zusammen mit in Wasser gelöstem Kohlendioxid abgetrennt. Die größeren und damit schwereren Partikel fallen nach unten aus und scheiden sich im unteren Bereich **24** des Sedimentationsabscheiders 20 ab. Werden Salze, die hydrothermale Schmelzen bilden, eingesetzt, so läuft an Stelle der festen Salzpartikel eine hydrothermale Schmelze nach unten und scheidet sich im unteren Bereich **24** des Sedimentationsabscheiders **20** ab.

## Patentansprüche

1. Verfahren zur Ausfällung von Salzen, wobei eine Salzlösung, die mindestens eine auszufällendes Salz enthält, und ein Fluid, das die Löslichkeit des mindestens einen auszufällenden Salzes vermindert, gleichzeitig in ein Gefäß eingeleitet werden, worin sich eine wässrige Lösung mit einer Temperatur von 300 °C bis 1000 °C bei einem Druck von 20 MPa bis 1000 MPa befindet, wodurch die Salze zumindest teilweise über das Volumen des Gefäßes ausfallen, wobei das mindestens eine auszufällende Salz bei den im Gefäß herrschenden Bedingungen eine hydrothermale Schmelze ausbildet.

2. Verfahren nach Anspruch 1, wobei ein Gas oder eine organische Flüssigkeit als Fluid eingesetzt wird.

3. Verfahren nach Anspruch 2, wobei ein bei einem sich an die Ausfällung anschließenden Verfahren entstehendes Produktgas als Fluid eingesetzt wird.

4. Verfahren nach Anspruch 2 oder 3, wobei CO₂ als Fluid eingesetzt wird.

5. Verfahren nach einem der Ansprüche 1 bis 4, wobei sich im Gefäß eine wässrige Lösung mit einer Temperatur von 300 °C bis 650 °C befindet.

6. Verfahren nach Anspruch 5, wobei sich im Gefäß eine wässrige Lösung mit einer Temperatur von 300 °C bis 400 °C befindet.
